# EUROPÄISCHE PATENTANMELDUNG

(11) **EP 0 640 449 A1**
(43) Veröffentlichungstag der Anmeldung: **01.03.1995**
(21) Anmeldenummer: 94112270.7
(22) Anmeldetag: 05.08.1994
(51) Int. Cl.: B26D 7/26, B26D 1/00, B23D 35/00, B02C 18/18

(54) **Schneidleiste mit einer Schneidschicht aus hochverschleissfestem Material**

(30) Priorität: 26.08.1993 DE 4328778
(71) Anmelder: Rieter Automatik GmbH, D-63757 Grossostheim (DE)
(72) Erfinder: Müller, Leo, D-63856 Bessenbach (DE)
(74) Vertreter: Bardehle, Heinz, Dipl.-Ing.

(57) **Zusammenfassung**

Die Erfindung betrifft eine Schneidleiste mit einer Schneidschicht (5) aus hochverschleißfestem Material, z. B. polykristallinem Diamantmaterial, die auf einer Unterlage (25) in fester Verbindung aufgebracht ist und mit dieser zusammen ein Schienenstück (4) bildet, wobei mehrere Schienenstücke aneinandergereiht an einem einen im wesentlichen rechteckförmigen Querschnitt aufweisenden Halter (1) aus verschleißfestem Material, z. B. Hartmetall, aufgebracht sind. Der Halter (1) ist an zwei benachbarten Kanten (2,3) je mit einer schräg in den Halter (1) hineinragenden Nut (6,7) mit im wesentlichen parallelen Wänden (13,14) versehen, in die die Schienenstücke (4) so eingelegt sind, daß die Wände (13,14) der beiden Nuten (6,7) bis an die Schneidschicht (5) der Schienenstücke (4) heranreichen, wobei die zwischen beiden Nuten (6,7) liegenden Wände durch ein an dem Halter (1) anschraubbares Klemmstück (17) gebildet werden, das alle in den beiden Nuten (6,7) gehaltenen Schienenstücke (4) gemeinsam an dem Halter (1) festklemmt.

## Beschreibung

Die Erfindung bezieht sich auf eine Schneidleiste mit einer Schneidschicht aus hochverschleißfestem Material, z. B. polykristallinem Diamantmaterial, die auf einer Unterlage in fester Verbindung aufgebracht ist und mit dieser zusammen ein Schienenstück bildet, wobei mehrere Schienerstücke aneinandergereiht an einem einen im wesentlichen rechteckförmigen Querschnitt aufweisenden Halter aus verschleißfestem Material. z. B. Hartmetall, aufgebracht sind.

Eine derartige Schneidleiste ist aus der DE-PS 31 08 954 bekannt. Die in dieser Patentschrift offenbarte Schneidleiste ist durch einen dreiteiligen Aufbau gekennzeichnet, nämlich derart, daß eine Hartmetallaufnahme (Unterlage) mit einer Schneidschicht auf einem eigenen, kurzen Träger befestigt ist, der seinerseits an einem Halter angebracht ist. Durch Aneinanderreihung gleichgeformter Träger mit den Hartmetallaufnahmen an dem Halter entsteht dann insgesamt die Schneidleiste. Der Halter ist hierzu mit einer längs einer seiner Kanten verlaufenden Ausnehmung versehen, die durch zwei rechtwinklig aufeinanderstoßende Wände gebildet ist, die ihrerseits rechtwinklig in die betreffenden Wandungen des Halters einlaufen. Durch die Aneinanderreihung einer Mehrzahl von Trägern, die einzeln am Halter anschraubbar sind, ergibt sich eine Auswechslungsmöglichkeit einzelner Teile der Schneidleiste, was insbesondere dann erforderlich ist, wenn an einer einzelnen Stelle der Schneidleiste eine Beschädigung auftritt. In diesem Falle ist dann nur der jeweilige Träger auszuwechseln.

Es wird weiterhin eine Schneidleiste angeboten und vertrieben, bei der anstelle einer Aneinanderreihung von gleichgeformten Trägern ein einziger durchgehender Träger für die gesamte Schneidleiste vorgesehen ist. Die Hartmetallaufnahme mit ihrer Schneidschicht erstreckt sich in diesem Falle durchgehend über den gesamten Träger. Der Träger weist hierzu längs einer seiner Kanten eine Ausnehmung mit zwei rechtwinklig aufeinanderstoßenden Wänden wie beim Gegenstand der DE-PS 31 08 954 auf, in die die Hartmetallaufnahme eingelötet ist. Diese Art der Befestigung setzt die verwendeten Materialien einer erheblichen thermischen Belastung aus, die zu Rißbildungen in den hier verwendeten spröden Materialien führen kann, was dann zu Ausbrüchen in der Schneide und damit Standzeitminderungen führt.

Bei einem weiterhin aus der DE-OS 23 49 697 bekannten Messerhalter für Schneidmaschinen mit Drehmessern ist ein aus hochverschleißfestem Material bestehendes Schienenstück an der Kante eines einen rechteckigen Querschnitt aufweisenden Halters eingesetzt der zu diesem Zweck an dieser Kante eine schräg in den Halter hineinragende Ausnehmung für das Schienenstück und ein Klemmstück enthält, mit dem das Schienenstück am Halter festgeklemmt wird.

Der Erfindung liegt die Aufgabe zugrunde, den Aufbau der bekannten Schneidleiste zu vereinfachen und die Befestigung der Hartmetallaufnahme bzw. des Schienenstücks zu verbessern. Erfindungsgemäß geschieht dies dadurch, daß der Halter an zwei benachbarten Kanten je mit einer schräg in den Halter hineinragenden Nut mit im wesentlichen parallelen Wänden versehen ist, in die die Schienenstücke so eingelegt sind, daß die Wände der beiden Nuten bis an die Schneidschicht der Schienenstücke heranreichen, wobei die zwischen beiden Nuten liegenden Wände durch ein an dem Halter anschraubbares Klemmstück gebildet werden, das alle in den beiden Nuten gehaltenen Schienenstücke gemeinsam an dem Halter festklemmt.

Aufgrund der Aufnahme der Schienenstücke in die schräg in den Halter hineinragende Nut mit ihren im wesentlichen parallelen Wänden werden die Halter beidseitig von den Wänden der Nut gestützt und in der Nut gehalten, wobei insbesondere ein auf die Schneidschicht wirkender Schneiddruck, z. B. von einem rotierenden Granulatormesser herrührend, die Halter in die Nut wegen deren Schräglage und damit gegen deren Grund drückt. Eine Belastung der Schneidleiste sichert also gleichzeitig deren Lage in dem sie aufnehmenden Halter, ohne daß es dabei des beim Gegenstand der DE-PS 31 08 954 erforderlichen Trägers bedarf. Die Gestaltung der Aufnahme für die Schienenstücke als schräge Nut mit den im wesentlichen parallelen Wänden gestattet es darüber hinaus, die Wände bis an die Schneidschicht der Schienenstücke heranreichen zu lassen, so daß das Material des Schienenstücks abgedeckt bleibt. Dies ist darum von Bedeutung, weil das Material der die Schneidschicht tragenden Unterlage, für die aus Gründen einer sicheren Verbindung mit der Schneidschicht kein besonders verschleißfestes Material verwendet werden kann, einem Verschleiß aufgrund dieser Abdeckung überhaupt nicht ausgesetzt ist. Dagegen kann der das Schienenstück aufweisende Halter aus verschleißfestem Material ausgebildet werden, da er keinerlei thermischen oder sonstigen Belastungen bei der Befestigung der Schienenstücke ausgesetzt werden muß. Es ergibt sich somit eine besonders verschleißfeste Anordnung einer Schneidleiste, die sich darüber hinaus dadurch auszeichnet, daß sie an ihrer Oberfläche nur eine geringe Erstreckung aufweisen muß, sie deckt nämlich praktisch nur die Öffnung der Nut ab. Für die Schienenstücke mit ihrer Schneidschicht wird also nur wenig Material gebraucht.

Es sei noch darauf hingewiesen, daß durch die DE-PS 36 11 179, Fig. 2, eine Schneidleiste bekanntgeworden ist, bei der in einer schrägen Nut eines Halters ein aus einem Block bestehender Schneideinsatz aus keramischem Material eingeklebt ist. Über die besonderen Anforderungen unterliegende Anbringung einer Schneidleiste mit Schneidschicht aus hochverschleißfestem Material ist in der Druckschrift nichts offenbart.

Eine vorteilhafte Gestaltung der Nut und der Schneidschicht besteht darin, daß die Nut derart an der Kante angebracht ist, daß ihre Wände im wesentlichen symmetrisch zur Kante in die zu der Kante führenden Wandungen des Halters einlaufen, wobei die Schneidschicht im Querschnitt ein Dreieck bildet, dessen Basis quer zum Schienenstück verläuft und dessen der Basis gegenüberliegender Winkel im wesentlichen einen rechten Winkel bildet, so daß die von ihm gebildete Schneide parallel zum Schienenstück und etwa mittig zu diesem verläuft. Aufgrund dieser Gestaltung ergibt sich ein besonders materialsparendes Schienenstück, wobei durch den dreieckförmigen Querschnitt der Schneidschicht diese eine dachförmige Ausbildung erhält, deren Dachseiten in die betreffenden Wandungen des Halters übergehen und dort, wo sie zusammenlaufen, die Schneide bilden. Hierdurch ergibt sich für die Schienenstücke mit ihrer Schneidschicht ein besonders kleiner Querschnitt und damit eine besonders gute Materialausnutzung.

Aufgrund der symmetrischen Anordnung der Nuten zu den Kanten des Halters läßt sich in günstiger Weise die Klemmbefestigung für die verschiedenen Schienenstücke erzielen, nämlich dadurch, daß jeweils eine Wand der Nut durch das an den Halter anschraubbare Klemmstück gebildet wird. Mit der Abnahme des Klemmstücks wird auch die betreffende Wand der Nut entfernt, so daß sich die Nut einseitig öffnet. Es können dann aus dem verbleibenden Teil der Nut Schienenstücke herausgenommen und neue Schienenstücke eingesetzt werden, womit sich eine günstige Auswechselbarkeit für verschlissene Schienenstücke ergibt.

Die Befestigung der Schienenstücke in der Nut kann vorteilhaft durch Einkleben erfolgen. Wegen der Schräglage der Nut ist es aber auch möglich, die Schienenstücke mit enger Toleranz einzupassen, wo sie dann bei Belastung durch einen Schneidvorgang in die Nut eingedrückt und durch die Passung in ausreichender Weise festgehalten werden.

Dadurch, daß die Schneidleiste an mehreren ihrer Kanten mit der Nut versehen ist, so daß sich ein Träger mit mehreren Schneiden ergibt, nämlich an allen den Kanten, an denen in eine Nut die genannten Schienenstücke eingelegt sind, läßt sich ein Halter, dessen an einer Kante vorgesehene Schneidschicht verschlissen ist, lediglich umdrehen und wieder in die betreffende Vorrichtung einsetzen, wobei sich eine neue unverbrauchte Schneidleiste dem zu schneidenden Material darbietet. Dies läßt sich so oft wiederholen, wie Kanten an dem Halter mit Schienenstücken ausgestattet sind, unter Zugrundelegung des im wesentlichen rechteckigen Querschnitts des Halters, also maximal viermal.

In den Figuren sind Ausführungsbeispiele der Erfindungen dargestellt. Es zeigen
- Figur 1: eine perspektivische Sicht eines Halters mit an zwei Kanten symmetrisch angeordneten Schienenstücken,
- Figur 2: ein Schienenstück aus der Anordnung gemäß Fig. 1 in vergrößerter Darstellung im Querschnitt,
- Figur 3: eine stirnseitige Ansicht des Halters ohne Schienenstücke in vergrößerter Darstellung,
- Figur 4: eine der Anordnung gemäß Fig. 1 ähnliche Gestaltung eines Halters mit einem Klemmstück zur Befestigung der Schienenstücke,

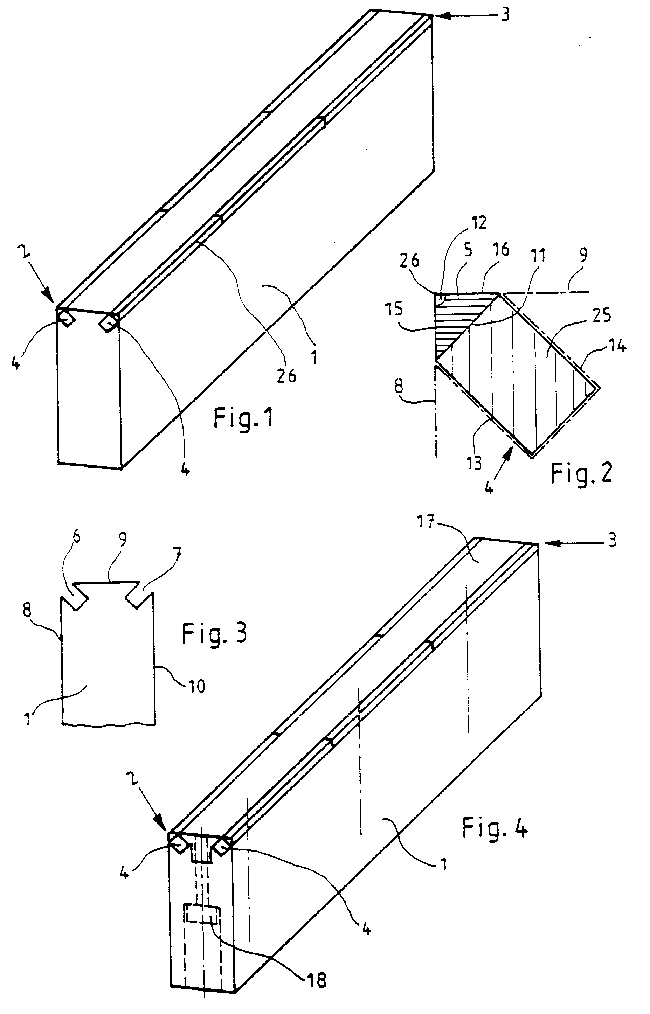

In Fig. 1 ist der Halter 1 dargestellt, und zwar in prinzipieller Gestaltung ohne Klemmstück, das in Fig. 4 gezeigt ist. Der Halter weist einen rechteckigen Querschnitt auf. Er findet als Schneidleiste z. B. in Granulatoren zum Granulieren von Kunststoffen Verwendung. Ein solcher Einsatz ist insbesondere in der Fig. 2 der oben erwähnten DE-PS 36 11 179 dargestellt. Der Halter 1 ist an zwei seiner Kanten mit drei unmittelbar aneinandergereihten Schienenstücken 4 versehen, die in aus Fig. 3 ersichtliche Nuten 6 und 7 eingelegt sind. Die Nuten 6 und 7 sind unter einem Winkel von 45° entlang der betreffenden Kante 2 bzw. 3 (Fig. 1) in den Halter 1 eingebracht, und zwar so, daß ihre Wände im wesentlichen symmetrisch zu der Kante 2 bzw. 3 in die zu der betreffenden Kante führenden Wandungen 8 und 9 bzw. 9 und 10 einlaufen. Wie Fig. 2 zeigt, bestehen die Schienenstücke 4 aus Unterlagen 25 und mit ihnen verbundenen Schneidschichten 5, die aus einem bekannten hochverschleißfesten Material bestehen. Bei der dargestellten Ausführungsform bilden die Schneidschichten 5 im Querschnitt ein Dreieck dessen Basis 11 mit einer Stirnseite der Unterlage 25 fest verbunden ist und dessen der Basis 11 gegenüberliegender Winkel 12 als Schneide 26 hier einen rechten Winkel bildet.

Die Schienenstücke 4 füllen die Nuten 6 und 7 vollständig aus, wobei die Wände 13 und 14 der Nuten 6 und 7 (siehe strichpunktierte Linien in Fig. 2), bis an die Schneidschicht 5 reichen. Dies bedeutet, daß die benachbarten Wandungen 8 und 9 des Halters 1 (in Fig. 2 strichpunktiert gezeichnet) ebenfalls bis an die Schneidschicht 5 heranreichen, so daß sich von den beiden Schenkein 15 und 16 der Schneidschicht 5 zu den Wandungen 8 und 9 ein lückenloser Übergang ergibt. Dies ist darum von Bedeutung, weil das Material des Schienenstücks 4 möglicherweise weicher ist als das Material des Halters 1. Das gegenüber dem Schienenstück 4 härtere Material des Halters 1 schließt sich dann unmittelbar an das Material der besonders harten und verschleißfesten Schneidschicht an, so daß die Anordnung an den Kanten 2 und 3 des Halters 1 besonders widerstandsfähig ausgebildet ist.

Die Schräglage der Nuten 6 und 7 erbringt aufgrund eines auf die Schneidschichten 5 wirkenden Schneiddrucks ein Eindrücken der Schneidschichten 5 mit den Schienenstücken in die Nuten 6 und 7, so daß diese aus den Nuten nicht herausgleiten können. Bezüglich der dabei auftretenden Kräfte und ihrer Richtungen sei ergänzend auf die bereits vorstehend erwähnte DE-PS 36 11 179 verwiesen.

Fig. 4 zeigt die vervollständigte Konstruktion gegenüber der Anordnung gemäß Fig. 1. Der Halter 1 gemäß Fig. 1 besitzt an seiner die Kanten 2 und 3 einschließenden Stirnseite das Klemmstück 17, das, wie durch die Schraube 18 angedeutet, an den Halter 1 herangezogen werden kann. Das Klemmstück 17 bildet an seinen Außenseiten die jeweils innenliegenden Wände der Nuten 6 und 7 (in Fig. 2 Wand 14). Zusammen mit dem in Fig. 4 dargestellten eingesetzten Klemmstück 17 bilden sich dann also die Nuten 6 und 7 (siehe Fig. 3) aus, in die die Schienenstücke 4 eingesetzt sind. Die Schienenstücke 4 mit ihren Schneidschichten 5 entsprechen den gleichen Bauteilen gemäß den Fig. 1 und 2.

Durch Lösen der Schraube 18 läßt sich das Klemmstück 17 abnehmen, womit die Schienenstücke 4 zugänglich werden und vom Halter 1 abgenommen werden können. Es besteht dann die Möglichkeit, neue Schienenstücke einzusetzen, woraufhin das Klemmstück 17 wieder anzuschrauben ist, womit dann die Schienenstücke an den Halter 1 angedrückt werden.

Es sei darauf hingewiesen, daß es natürlich auch möglich ist, bei den dargestellten Haltern 1 sämtliche vier Kanten mit den Schienenstücken zu versehen.

## Patentansprüche

1. Schneidleiste mit einer Schneidschicht (5;24) aus hochverschleißfestem Material, z. B. polykristallinem Diamantmaterial, die auf einer Unterlage (25) in fester Verbindung aufgebracht ist und mit dieser zusammen ein Schienenstück (4;23) bildet, wobei mehrere Schienenstücke (4;23) aneinandergereiht an einem einen im wesentlichen rechteckförmigen Querschnitt aufweisenden Halter (1) aus verschleißfestem Material, z. B. Hartmetall, aufgebracht sind, **dadurch gekennzeichnet,** daß der Halter (1) an zwei benachbarten Kanten (2,3;19) je mit einer schräg in den Halter (1) hineinragenden Nut mit im wesentlichen parallelen Wänden (13,14;20,21) versehen ist, in die die Schienenstücke (4;23) so eingelegt sind, daß die Wände (13,14;20,21) der beiden Nuten bis an die Schneidschicht (5;24) der Schienenstücke (4;23) heranreichen, wobei die zwischen beiden Nuten liegenden Wände durch ein an dem Halter (1) anschraubbares Klemmstück (17) gebildet werden, das alle in den beiden Nuten gehaltenen Schienenstücke (4) gemeinsam an dem Halter (1) festklemmt (Fig. 4).

2. Schneidleiste nach Anspruch 1, **dadurch gekennzeichnet,** daß die Nut derart an der Kante (2,3) angebracht ist, daß ihre Wände (13,14) im wesentlichen symmetrisch zur Kante (2,3) in die zu der Kante (2,3) führenden Wandungen (8,9) des Halters (1) einlaufen, wobei die Schneidschicht (5) im Querschnitt ein Dreieck bildet, dessen Basis (11) quer zum Schienenstück (4) verläuft und dessen der Basis (11) gegenüberliegender Winkel (12) im wesentlichen einen rechten Winkel bildet, so daß die von ihm gebildete Schneide (26) parallel (4) zum Schienenstück und etwa mittig zu diesem verläuft.

3. Schneidleiste nach Anspruch 1, **dadurch gekennzeichnet,** daß die Nut derart an der Kante (19) angebracht ist, daß eine Wand (20) der Nut im wesentlichen in Richtung auf die Kante (19) zu verläuft und die Öffnung der Nut sich im wesentlichen vollständig über eine Seite des Halters (1) erstreckt, wobei die Schienenstücke (23) derart in die Nut eingelegt sind, daß ihre Schneidschicht (24) mit der in die Öffnung der Nut übergehenden Wandung (22) des Halters (1) fluchtet.
